# EUROPEAN PATENT APPLICATION

(11) **EP 4 586 719 A1**
(43) Date of publication of application: **16.07.2025**
(21) Application number: 23871093.3
(22) Date of filing: 28.09.2023
(51) Int. Cl.: H04W 72/0446

(54) **COMMUNICATION METHOD AND COMMUNICATION APPARATUS**

(30) Priority: 30.09.2022 CN 202211217127
(71) Applicant: Huawei Technologies Co., Ltd., Shenzhen, Guangdong 518129 (CN)
(72) Inventor: YUAN, Shitong, Shenzhen, Guangdong 518129 (CN); SONG, Xinghua, Shenzhen, Guangdong 518129 (CN); LIU, Fengwei, Shenzhen, Guangdong 518129 (CN)
(74) Representative: Körber, Martin Hans
(86) International application number: PCT/CN2023/122937
(87) International publication number: WO 2024/067869

(57) **Abstract**

This application provides a communication method and apparatus. The communication method includes: A first node receives second indication information from a second node, where the first node is configured with first configuration information, the first configuration information is used to configure a resource type of each slot in a first set, the first set includes a first slot, the first slot is a slot in which a first resource is configured, and the second indication information indicates resource availability of at least one frequency domain resource group. The first node determines resource availability of the first slot based on resource availability of one or more frequency domain resource groups in a first frequency domain resource group. The first node communicates with a third node in a slot that is in the first slot and that is an indication of availability. The second node is an upper-level integrated access and backhaul IAB node of the first node, the third node is a lower-level IAB node of the first node or a terminal device served by the first node, the resource type includes an available resource, a not available resource, and the first resource, and whether the first resource is available is indicated by the second node. Resource availability of a relay node can be flexibly indicated.

## Description

This application claims priority to Chinese Patent Application No. 202211217127.X, filed with the China National Intellectual Property Administration on September 30, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

An integrated access and backhaul (integrated access and backhaul, IAB) network technology is introduced in a 5^{th} generation (5^{th} generation, 5G) mobile communication system. Both an access link (access link) and a backhaul link (backhaul link) in an IAB network may use a wireless transmission solution, to reduce optical fiber deployment, and reduce deployment costs.

In the IAB network, a resource configuration of an IAB node may include at least one of a time domain resource availability configuration and a frequency domain resource availability configuration. In addition, the IAB node may receive at least one of a slot resource availability indication and a frequency domain resource availability indication. In this case, how to flexibly indicate resource availability of the IAB node is a problem to be resolved.

### SUMMARY

This application provides a communication method and apparatus, to flexibly indicate resource availability of a relay node, and improve communication performance of a system.

According to a first aspect, a communication method is provided, and the method includes: A first node receives second indication information from a second node, where the first node is configured with first configuration information, the first configuration information is used to configure a resource type of each slot in a first set, the first set includes a first slot, the first slot is a slot in which a first resource is configured, and the second indication information indicates resource availability of at least one frequency domain resource group; the first node determines resource availability of the first slot based on resource availability of one or more frequency domain resource groups in a first frequency domain resource group; and the first node communicates with a third node in a slot that is in the first slot and that is an indication of availability, where the second node is an upper-level integrated access and backhaul IAB node of the first node, the third node is a lower-level IAB node of the first node or a terminal device served by the first node, the resource type includes an available resource, a not available resource, and the first resource, and whether the first resource is available is indicated by the second node.

With reference to the first aspect, in some implementations of the first aspect, that the first node determines resource availability of the first slot based on resource availability of one or more frequency domain resource groups in a first frequency domain resource group includes: The first node determines the resource availability of the first slot based on resource availability of a 1^{st} frequency domain resource group in the first frequency domain resource group; or the first node determines the resource availability of the first slot based on resource availability of each frequency domain resource group in the first frequency domain resource group.

With reference to the first aspect, in some implementations of the first aspect, if each frequency domain resource group in the first frequency domain resource group is an indication of availability, the first slot is available.

With reference to the first aspect, in some implementations of the first aspect, if each frequency domain resource group in the first frequency domain resource group is an indication of availability, the first slot is available. Alternatively, if any frequency domain resource group in the first frequency domain resource group is an indication of availability, the first slot is available.

With reference to the first aspect, in some implementations of the first aspect, the resource availability of each frequency domain resource group in the first frequency domain resource group corresponds to resource availability of at least one type of symbol. If each frequency domain resource group in at least one frequency domain resource group corresponding to a first symbol in the first slot is an indication of availability, the first symbol is available. Alternatively, if any frequency domain resource group in at least one frequency domain resource group corresponding to a first symbol in the first slot is an indication of availability, the first symbol is available. The at least one type of symbol includes the first symbol, and the first symbol is an uplink symbol, a downlink symbol, or a flexible symbol.

According to a second aspect, a communication method is provided. The method includes: A first node receives first indication information from a second node, where the first indication information indicates resource availability of a first slot in a first set, the first set includes at least one slot, the first slot is a slot in which a first resource is configured, the first node is configured with first configuration information and second configuration information, the first configuration information is used to configure a resource type of each slot in the first set, and the second configuration information is used to configure a resource type of at least one frequency domain resource group corresponding to each slot in the first set; the first node determines a second resource based on the first indication information; and the first node communicates with a third node over the second resource, where the second node is an upper-level integrated access and backhaul IAB node of the first node, the third node is a lower-level IAB node of the first node or a terminal device served by the first node, the resource type includes an available resource, a not available resource, and the first resource, and whether the first resource is available is indicated by the second node.

With reference to the second aspect, in some implementations of the second aspect, if the first indication information indicates that the first slot is no indication of availability, the first node determines that the second resource includes an available resource in at least one frequency domain resource group corresponding to a first slot.

With reference to the second aspect, in some implementations of the second aspect, if the first set includes a second slot configured to be an available resource, the first node determines that the second resource includes the second slot; and/or if the first set includes a third slot configured to be not available, the first node determines that the second resource includes the third slot.

With reference to the second aspect, in some implementations of the second aspect, if a first symbol in the first slot is an indication of availability and a second symbol in the first slot is no indication of availability, the first node determines that the second resource includes an available resource in at least one frequency domain resource group corresponding to the first slot. The first symbol and the second symbol each are any one of an uplink symbol, a downlink symbol, or a flexible symbol, and the first symbol and the second symbol are of different symbol types.

According to a third aspect, a communication method is provided, including: A first node receives first indication information and second indication information from a second node, where the first indication information indicates resource availability of a first slot in a first set, the first set includes at least one slot, the first slot is a slot in which a first resource is configured, the second indication information indicates resource availability of a first frequency domain resource group, the first frequency domain resource group is a frequency domain resource group configured with the first resource, the first node is configured with first configuration information and second configuration information, the first configuration information is used to configure a resource type of each slot in the first set, and the second configuration information is used to configure a resource type of at least one frequency domain resource group corresponding to each slot in the first set; the first node determines a second resource based on at least one of the first indication information and the second indication information; and the first node communicates with a third node over the first resource, where the second node is an upper-level integrated access and backhaul IAB node of the first node, the third node is a lower-level IAB node of the first node or a terminal device served by the first node, the resource type includes an available resource, a not available resource, and the first resource, and whether the first resource is available is indicated by the second node.

With reference to the third aspect, in some implementations of the third aspect, that the first node determines a second resource based on at least one of the first indication information and the second indication information includes: The first node determines the second resource based on the second indication information, where the second resource includes an available resource in the at least one frequency domain resource group corresponding to each slot in the first set.

With reference to the third aspect, in some implementations of the third aspect, that the first node determines a second resource based on at least one of the first indication information and the second indication information includes: The first node determines the second resource based on the first indication information, where the first indication information indicates that the first slot is an indication of availability, and the second resource includes the first slot; or the first node determines the second resource based on the first indication information and the second indication information.

With reference to the third aspect, in some implementations of the third aspect, that the first node determines the second resource based on the first indication information and the second indication information includes: The first node determines, based on the first indication information, that the first slot is no indication of availability; and the first node determines the second resource based on the second indication information, where the second resource includes an available resource in the at least one frequency domain resource group corresponding to each slot in the first set.

With reference to the third aspect, in some implementations of the third aspect, that the first node determines the second resource based on the first indication information and the second indication information includes: The first node determines, based on the first indication information, that a first symbol in the first slot is available and that a second symbol in the first slot is no indication of availability; and the first node determines the second resource based on the second indication information, where the second resource includes the first symbol and an available resource in at least one frequency domain resource group corresponding to the second symbol.

According to a fourth aspect, a communication apparatus is provided, including a transceiver unit and a processing unit. The transceiver unit is configured to receive second indication information from a second node, where the apparatus is configured with first configuration information, the first configuration information is used to configure a resource type of each slot in a first set, the first set includes a first slot, the first slot is a slot in which a first resource is configured, and the second indication information indicates resource availability of at least one frequency domain resource group. The processing unit is configured to determine resource availability of the first slot based on resource availability of one or more frequency domain resource groups in a first frequency domain resource group. The first node communicates with a third node in a slot that is in the first slot and that is an indication of availability, where the second node is an upper-level integrated access and backhaul IAB node of the apparatus, the third node is a lower-level IAB node of the apparatus or a terminal device served by the apparatus, the resource type includes an available resource, a not available resource, and the first resource, and whether the first resource is available is indicated by the second node.

With reference to the fourth aspect, in some implementations of the fourth aspect, the processing unit is specifically configured to: determine the resource availability of the first slot based on resource availability of a 1^{st} frequency domain resource group in the first frequency domain resource group; or determine the resource availability of the first slot based on resource availability of each frequency domain resource group in the first frequency domain resource group.

With reference to the fourth aspect, in some implementations of the fourth aspect, the processing unit is specifically configured to: if each frequency domain resource group in the first frequency domain resource group is an indication of availability, determine that the first slot is available.

With reference to the fourth aspect, in some implementations of the fourth aspect, the processing unit is specifically configured to: if each frequency domain resource group in the first frequency domain resource group is an indication of availability, determine that the first slot is available; or if any frequency domain resource group in the first frequency domain resource group is an indication of availability, determine that the first slot is available.

With reference to the fourth aspect, in some implementations of the fourth aspect, the resource availability of each frequency domain resource group in the first frequency domain resource group corresponds to resource availability of at least one type of symbol. The processing unit is specifically configured to: if each frequency domain resource group in at least one frequency domain resource group corresponding to a first symbol in the first slot is an indication of availability, determine that the first symbol is available; or if any frequency domain resource group in at least one frequency domain resource group corresponding to a first symbol in the first slot is an indication of availability, determine that the first symbol is available. The at least one type of symbol includes the first symbol, and the first symbol is an uplink symbol, a downlink symbol, or a flexible symbol.

According to a fifth aspect, a communication apparatus is provided, including a transceiver unit and a processing unit. The transceiver unit is configured to receive first indication information from a second node, where the first indication information indicates resource availability of a first slot in a first set, the first set includes at least one slot, the first slot is a slot in which a first resource is configured, the apparatus is configured with first configuration information and second configuration information, the first configuration information is used to configure a resource type of each slot in the first set, and the second configuration information is used to configure a resource type of at least one frequency domain resource group corresponding to each slot in the first set. The processing unit is configured to determine a second resource based on the first indication information. The transceiver unit is further configured to communicate with a third node over the second resource, where the second node is an upper-level integrated access and backhaul IAB node of the apparatus, the third node is a lower-level IAB node of the apparatus or a terminal device served by the apparatus, the resource type includes an available resource, a not available resource, and the first resource, and whether the first resource is available is indicated by the second node.

With reference to the fifth aspect, in some implementations of the fifth aspect, the processing unit is specifically configured to: if the first indication information indicates that the first slot is no indication of availability, determine that the second resource includes an available resource in at least one frequency domain resource group corresponding to a first slot.

With reference to the fifth aspect, in some implementations of the fifth aspect, the processing unit is further configured to: if the first set includes a second slot configured to be an available resource, determine that the second resource includes the second slot; and/or if the first set includes a third slot configured to be not available, determine that the second resource includes the third slot.

With reference to the fifth aspect, in some implementations of the fifth aspect, the processing unit is specifically configured to: if a first symbol in the first slot is an indication of availability and a second symbol in the first slot is no indication of availability, determine that the second resource includes an available resource in at least one frequency domain resource group corresponding to the first slot. The first symbol and the second symbol each are any one of an uplink symbol, a downlink symbol, or a flexible symbol, and the first symbol and the second symbol are of different symbol types.

According to a sixth aspect, a communication apparatus is provided, including a transceiver unit and a processing unit. The transceiver unit is configured to receive first indication information and second indication information from a second node, where the first indication information indicates resource availability of a first slot in a first set, the first set includes at least one slot, the first slot is a slot in which a first resource is configured, the second indication information indicates resource availability of a first frequency domain resource group, the first frequency domain resource group is a frequency domain resource group configured with the first resource, the first apparatus is configured with first configuration information and second configuration information, the first configuration information is used to configure a resource type of each slot in the first set, and the second configuration information is used to configure a resource type of at least one frequency domain resource group corresponding to each slot in the first set. The processing unit is configured to determine a second resource based on at least one of the first indication information and the second indication information. The transceiver unit is further configured to communicate with a third node over the first resource, where the second node is an upper-level integrated access and backhaul IAB node of the apparatus, the third node is a lower-level IAB node of the first node or a terminal device served by the apparatus, the resource type includes an available resource, a not available resource, and the first resource, and whether the first resource is available is indicated by the second node.

With reference to the sixth aspect, in some implementations of the sixth aspect, the processing unit is specifically configured to determine the second resource based on the second indication information, where the second resource includes an available resource in the at least one frequency domain resource group corresponding to each slot in the first set.

With reference to the sixth aspect, in some implementations of the sixth aspect, the processing unit is specifically configured to: determine the second resource based on the first indication information, where the first indication information indicates that the first slot an indication of availability, and the second resource includes the first slot; or determine the second resource based on the first indication information and the second indication information.

With reference to the sixth aspect, in some implementations of the sixth aspect, the processing unit is specifically configured to: determine, based on the first indication information, that the first slot is no indication of availability; and determine the second resource based on the second indication information, where the second resource includes an available resource in the at least one frequency domain resource group corresponding to each slot in the first set.

With reference to the sixth aspect, in some implementations of the sixth aspect, the processing unit is specifically configured to: determine, based on the first indication information, that a first symbol in the first slot is available and that a second symbol in the first slot is no indication of availability; and determine the second resource based on the second indication information, where the second resource includes the first symbol and an available resource in at least one frequency domain resource group corresponding to the second symbol.

According to a seventh aspect, a first node is provided, including a processor, and optionally, further including a memory. The processor is configured to control a transceiver to receive and send a signal, and the memory is configured to store a computer program. The processor is configured to invoke and run the computer program from the memory, to enable the first node and/or a terminal device to perform the method in any one of the first aspect to the third aspect or the possible implementations of the first aspect to the third aspect.

Optionally, there are one or more processors, and there are one or more memories.

Optionally, the memory may be integrated with the processor, or the memory and the processor are disposed separately.

Optionally, the first node and/or the terminal device further include/includes a transceiver, and the transceiver may be specifically a transmitter machine (transmitter) and a receiver machine (receiver).

According to an eighth aspect, a communication system is provided, including: a first node and/or a second node, configured to perform the method in any one of the first aspect to the third aspect or the possible implementations of the first aspect to the third aspect.

According to a ninth aspect, a computer-readable storage medium is provided, and the computer-readable storage medium stores a computer program or code. When the computer program or code is run on a computer, the computer is enabled to perform the method in any one of the first aspect to the third aspect or the possible implementations of the first aspect to the third aspect.

According to a tenth aspect, a chip is provided, including at least one processor. The at least one processor is coupled to a memory, the memory is configured to store a computer program, and the processor is configured to invoke and run the computer program from the memory, to enable a first node on which a chip system is installed to perform the method in any one of the first aspect to the third aspect or the possible implementations of the first aspect to the third aspect.

The chip may include an input circuit or an interface configured to send information or data, and an output circuit or an interface configured to receive information or data.

According to an eleventh aspect, a computer program product is provided, and the computer program product includes computer program code. When the computer program code is run by a network device, a first node is enabled to perform the method in any one of the first aspect to the third aspect or the possible implementations of the first aspect to the third aspect.

### BRIEF DESCRIPTION OF DRAWINGS

FIG. 1 is a diagram of an example of a network architecture applicable to this application;
FIG. 2 is a diagram of an example of a structure of an integrated access and backhaul IAB node applicable to this application;
FIG. 3 is a diagram of an example of resource utilization in a DU time domain resource configuration supported by a current protocol;
FIG. 4 is a diagram of another example of resource utilization in a DU time domain resource configuration supported by a current protocol;
FIG. 5 is a flowchart of interaction of a communication method according to an embodiment of this application;
FIG. 6 is a diagram of a communication apparatus according to an embodiment of this application; and
FIG. 7 is a diagram of a structure of a communication apparatus according to an embodiment of this application.

### DESCRIPTION OF EMBODIMENTS

The following describes technical solutions of this application with reference to the accompanying drawings.

The technical solutions of embodiments of this application may be applied to various communication systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} Generation, 5G) mobile communication system, or a new radio (new radio, NR) system. The 5G mobile communication system may be non-standalone (non-standalone, NSA) or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6^{th} generation (6^{th} Generation, 6G) mobile communication system. This is not limited in this application.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device, for example, a handheld device or a vehicle-mounted device having a wireless connection function, that provides a user with voice/data connectivity. Currently, some examples of the terminal may be a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a television and other appliances, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, or a terminal device in a 5G network or a terminal device in a future evolved public land mobile communication network (public land mobile network, PLMN).

The wearable device may also be referred to as a wearable intelligent device, and is a general term of wearable devices, such as glasses, gloves, watches, clothes, and shoes that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrowband (narrowband, NB) technology.

In embodiments of this application, the terminal device may alternatively be a vehicle or an entire vehicle, and may implement communication by using internet of vehicles, or may be a component located in a vehicle (for example, placed in the vehicle or installed in the vehicle), that is, a vehicle-mounted terminal device, an on-board module, or an on-board unit (on-board unit, OBU).

In addition, the terminal device may alternatively include sensors such as an intelligent printer, a train detector, and a gas station. Main functions of the terminal device include collecting data (for some terminal devices), receiving control information and downlink data of a network device, sending an electromagnetic wave, and transmitting uplink data to the network device.

In embodiments of this application, the network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), or the like. Alternatively, the device may be a gNB or a transmission point (TRP or TP) in a 5G system, for example, an NR system, or one antenna panel or a group (including a plurality of antenna panels) of antenna panels of a base station in the 5G system. Alternatively, the device may be a network node, for example, a baseband unit (BBU), or a distributed unit (distributed unit, DU), that constitutes a gNB or a transmission point, a base station in a next generation 6G communication system, or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Because information at the RRC layer is finally changed into information at the PHY layer, or is changed from information at the PHY layer, in this architecture, higher layer signaling such as RRC layer signaling may also be considered to be sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). Small cells herein may include a metro cell (metro cell), a micro cell (micro cell), a pico cell (pico cell), a femto cell (femto cell), and the like. These small cells have features of small coverage and low transmit power, and are applicable to providing a high-speed data transmission service.

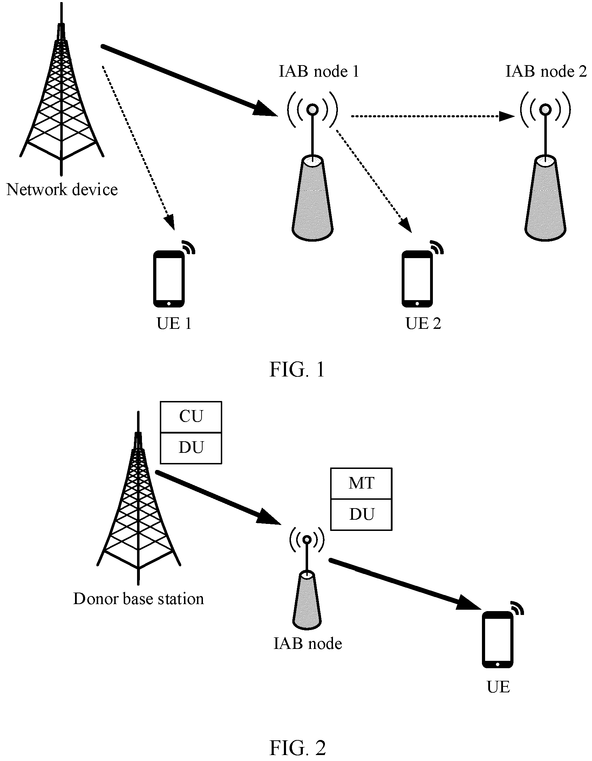

FIG. 1 is a diagram of a communication system 100 applicable to a communication method according to an embodiment of this application. As shown in FIG. 1, the communication system 100 may include a network device (for example, a donor base station), relay devices (for example, an IAB node 1 and an IAB node 2), and terminal devices (for example, UE 1 and UE 2). A link between the network device and the relay device may be referred to as a backhaul (backhaul, BH) link, and a link between the relay device and the terminal device may be referred to as an access (access, AC) link.

A name of the link between the network device and the relay device, a name of a link between the relay device and the network, and a name of the link between the relay device and the terminal device are not limited in this application. The network device may also be referred to as a "donor network device", a "donor network device", a "donor base station", or a "relay device". The donor base station may be an access network element having a complete base station function, or may be an access network element in a form in which a central unit CU and a distributed unit DU are separated.

In embodiments of this application, the network device may be an IAB node or a node used for relay communication. The relay device may be deployed farther away from the base station or the access network device than the terminal device, and the access network device may be another relay device. In addition, the relay device may be referred to as a relay node (relay node, RN), a relay transmission reception point (relay transmission reception point, rTRP), or an integrated access and backhaul node (integrated access and backhaul node, IAB node). An upper-level node of the relay node may be a gNB (including a gNB-DU, a gNB-CU, and the like), or may be another relay node.

It should be understood that, although FIG. 1 shows that the relay device is directly connected to the network device through a wireless air interface, an IAB relay system may support a plurality of levels of relaying. To be specific, the IAB node may establish a wireless backhaul link with one or more upper-level nodes, and access the donor base station through the one or more upper-level nodes. Similarly, one IAB node may further provide a service for one or more lower-level nodes. The donor base station may communicate with the IAB node 1, or may directly communicate with the user equipment UE 1. Similarly, the IAB node 1 may communicate with the IAB node 2, or may communicate with the user equipment UE 2, and so on.

It should be understood that the foregoing communication system and the network architecture are merely examples for description. To describe the technical solutions in embodiments of this application more clearly, the technical solutions provided in embodiments of this application are not limited. For example, the communication system may further include a core network device. The core network device may be connected to a plurality of access network devices, and is configured to: control the access network devices, and distribute data received from a network side (for example, an internet) to the access network devices.

FIG. 2 is a diagram of another example of a network architecture applicable to this application. As shown in FIG. 2, a donor base station may be further divided into a CU and a DU in terms of functions and logic, and an IAB node may be further divided into a mobile-termination (mobile-termination, MT) module and a distributed unit (distributed unit, DU) module in terms of functions and logic.

An MT function is defined as a component similar to UE. In IAB, the MT is referred to as a function that camps on an IAB node. The MT is similar to a function of common UE, and the IAB node may access an upper-level node or a network by using the MT.

A DU function is relative to a CU function. In 5G NR, functions of a base station are divided into two parts. This is referred to as CU-DU separation. From a perspective of a protocol stack, the CU includes a radio resource control (radio resource control, RRC) layer and a packet data convergence protocol (packet data convergence protocol, PDCP) layer of an original LTE base station. The DU includes a radio link control (radio link control, RLC) layer, a media access control (media access control, MAC) layer, and a physical (physical, PHY) layer. In common 5G base station deployment, the CU and the DU may be connected through an optical fiber, and logically there is a specially defined F1 interface used for communication between the CU and the DU. From a perspective of a function, the CU is mainly responsible for processing a non-real-time protocol and service, for example, radio resource control and configuration, cross-cell mobility management, and bearer management. The DU is mainly responsible for processing a physical layer protocol and a real-time service, for example, scheduling and physical signal generation and sending. Functions of these protocol layers may be implemented by one node, or may be implemented by a plurality of nodes. For example, in an evolved structure, a RAN device may include a central unit CU and a distributed unit DU, and a plurality of DUs may be controlled by one CU in a centralized manner.

For example, downlink transmission is performed between the CU and the DU, and an F1-AP data packet generated by the CU is encapsulated into an IP packet, and is transferred between multi-hop nodes (for example, an IAB node 1 and an IAB node 2) over an air interface. After the data packet arrives at a target IAB node, the data packet is processed at an MT module adaptation layer of the target IAB and then forwarded to a local IAB DU module for processing. Finally, the F1-AP data packet is obtained through parsing in the DU.

In the foregoing network architecture, signaling generated by the CU may be sent to a terminal device by using the DU, or signaling generated by a terminal device may be sent to the CU by using the DU. The DU may transparently transmit the signaling to the terminal device or the CU by directly encapsulating the signaling at a protocol layer without parsing the signaling.

For ease of description, the following describes terms that may be used in embodiments of this application.
1. Upper-level node: The upper-level node is a node that receives data or a signal during uplink transmission, or a node that sends data or a signal during downlink transmission. For example, a node or a network device that provides a wireless backhaul link resource may be referred to as an upper-level node of a relay device.
2. Lower-level node: The lower-level node is a node that sends data or a signal during uplink transmission, or a node that receives data or a signal during downlink transmission. For example, a node that transmits data to the network or receives data from the network by using a backhaul link resource may be referred to as a lower-level node. For example, the relay device is referred to as a lower-level node of the network device, and the network is a core network or a network, for example, the Internet or a dedicated network, above another access network.
3. Access link: The access link is a radio link used by a node to communicate with a lower-level node of the node, and access links include an uplink transmission link and a downlink transmission link. Uplink transmission on the access link is also referred to as access link uplink transmission, and downlink transmission on the access link is also referred to as access link downlink transmission. The node includes but is not limited to the foregoing IAB node.
4. Backhaul link: The backhaul link is a radio link used by a node to communicate with an upper-level node and/or a lower-level node of the node, and backhaul links include an uplink transmission link and a downlink transmission link. Uplink transmission on the backhaul link is also referred to as backhaul link uplink transmission, and downlink transmission on the backhaul link is also referred to as backhaul link downlink transmission. The node includes but is not limited to the foregoing IAB node.
5. Spatial division multiplexing (spatial duplex multiplexing, SDM): The spatial division multiplexing may be understood as that a same frequency band is reused in different spaces, and a plurality of orthogonal channels in the spaces are used to simultaneously transmit signals to achieve an objective of capacity expansion. That is, signals are simultaneously received from a plurality of directions. To improve spectral efficiency, a spatial division multiplexing scenario is widely used.
9. Time division multiplexing (time division multiplexing, TDM): The time division multiplexing may be understood as transmitting different signals by using different time periods of a same physical connection, to achieve an objective of multi-channel transmission. In time division multiplexing, time is used as a parameter for signal division. Therefore, all signals cannot overlap with each other on a time axis. In other words, time provided for an entire channel to transmit information is divided into several slots, and these slots are allocated to each signal source for use.
10. Frequency division multiplexing (frequency division multiplexing, FDM): The frequency division multiplexing may be understood as dividing a total bandwidth used to transmit a channel into several sub-bands (sub-channels). One signal is transmitted on each sub-channel, and guard bands are set between the sub-channels for isolation, so that transmitted signals do not interfere with each other, and signals transmitted on the sub-channels work in a parallel manner.

In a communication process, air interface resources of a backhaul link and an access link of an IAB node need to be configured by a donor base station or an upper-level node. Resource configurations of the IAB node may include an MT resource configuration and a DU resource configuration. The MT resource configuration indicates a resource used when an MT of the IAB node communicates with an upper-level node. The DU resource configuration indicates a resource used when a DU of the IAB node communicates with a lower-level node.

Rel-16 supports only working in time division multiplexing of the IAB MT and the DU. In other words, the backhaul link (corresponding to the MT) and the access link (corresponding to the DU) work at different moments. Therefore, the IAB node needs to switch between receiving and sending on the backhaul link and receiving and sending on the access link. Therefore, an MT resource and a DU resource may be configured.

The MT resource configuration is similar to a common UE resource configuration in an NR protocol. In other words, the base station may configure a transmission direction in each slot for the MT. The configuration may be a periodical configuration. Specifically, one slot and a plurality of symbols in the slot may be configured to be of three types: downlink (downlink, D), uplink (uplink, U), and flexible (Flexible, F).

The DU resource configuration indicates a resource configuration when the DU of the IAB node communicates with the lower-level node. The DU resource of the IAB node may be configured to be of three types: uplink, downlink, and flexible. Different from the transmission direction for the MT and used for the backhaul link, a transmission direction for the DU is configured for UE that accesses the DU. Further, an uplink resource, a downlink resource, and a flexible resource of the DU resource may be further classified into two types: hard (H) and soft (S). A DU hard resource indicates that the resource is always available to the DU. A DU soft resource indicates whether the resource is available to the DU depends on an indication of the upper-level node. There is another not available (NA, Not Available) resource type for the DU, indicating that the DU can never use the resource. FIG. 2 is used as an example. If the DU is configured to be H, due to a limitation of the time division multiplexing, the MT does not expect to be scheduled (or receiving and sending of the MT do not affect working of the DU). If the DU is configured to be a slot of NA, the DU does not work, and the MT can normally receive and send a signal. If the DU is configured to be S, the upper-level node needs to further indicate whether a resource of the slot is available to the DU.

Downlink indicates that a resource is used for downlink transmission, uplink indicates that the resource is used for uplink transmission, and flexible indicates that a transmission direction of the resource depends on a further indication of the upper-level node.

The following first describes the technical solutions in a protocol that are related to embodiments of this application.

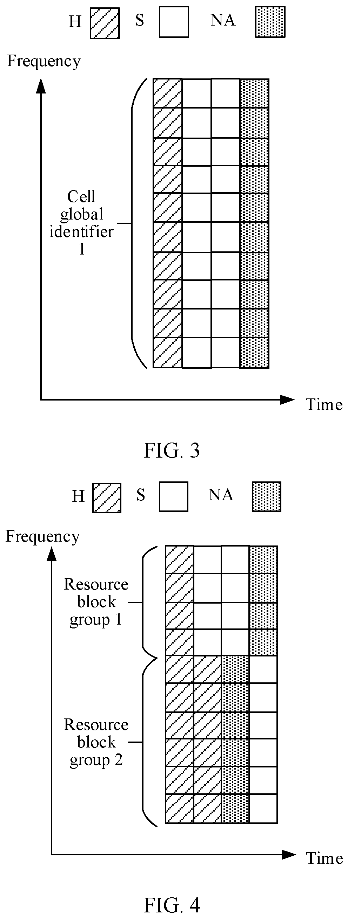

FIG. 3 is a diagram of an example of resource utilization in a DU time domain resource configuration supported by a current protocol Rel-16. As shown in FIG. 3, a horizontal coordinate and a vertical coordinate respectively represent a time domain resource and a frequency domain resource. For an entire cell, that is, a cell global identifier (cell global ID, CGI) 1, a time domain H resource, a time domain S resource, a time domain S resource, and a time domain NA resource are separately configured in Rel.

It should be noted that the time domain hard (H) resource is a resource that is definitely available to a DU, and an MT usually does not use the time domain resource for communication. The time domain not available (NA) resource is a resource that is not available to the DU, and the MT may use the time domain resource for communication. The time domain soft (S) resource is a resource whose availability to the DU mainly depends on a further indication of an upper-level node.

For example, the horizontal coordinate may be considered as a configuration status of four different time domain resources of the cell. To be specific, a first time domain resource of a DU cell is definitely available, whether a second time domain resource and a third time domain resource are available depends on the indication of the upper-level node, and a fourth slot resource is not available. It should be understood that the MT is configured with only an uplink/downlink transmission direction, and is not configured with the H/S/NA resource. Because the upper-level node knows a resource configuration status of a lower-level node, to avoid a conflict between the MT and the DU, the upper-level node does not schedule the MT on the first time domain resource, a DU of the upper-level node sends downlink control information (downlink control information, DCI) signaling to the lower-level node, to further indicate whether the second time domain resource and the third time domain resource are available to the DU, and the upper-level node may choose to schedule or not to schedule the MT on the fourth time domain resource based on a transmission requirement.

FIG. 4 is a diagram of an example of resource utilization in a DU frequency domain resource configuration supported by a current protocol Rel-17. As shown in FIG. 4, a horizontal coordinate and a vertical coordinate respectively represent a time domain resource and a frequency domain resource. In this solution, an original entire cell bandwidth is first divided into a plurality of parts in frequency domain, and bandwidth sizes may be different. To be specific, a frequency domain resource is divided (for example, to a resource block group 1 and a resource block group 2), and is refined into a granularity of a frequency domain resource block group RBG. Then, time domain H/S/NA is configured at each smaller frequency domain granularity.

For example, the horizontal coordinate may be considered as a configuration status of four different slot resources of the cell. For the resource block group 1, a first time domain resource is definitely available, whether a second time domain resource and a third time domain resource are available depends on an indication of an upper-level node, and a fourth time domain resource is not available. For the resource block group 2, the first time domain resource and the second time domain resource are definitely available, whether the third time domain resource is available depends on the indication of the upper-level node, and the fourth time domain resource is not available.

A resource configuration of an IAB node may be determined based on an MT resource configuration and a DU resource configuration. For example, a resource type of the DU and a corresponding transmission direction may be transferred between the CU and the DU by using F1-AP interface signaling. For example, "GNB-DU RESOURCE CONFIGURATION" defined in 3GPP TS 38.473 9.2.9.3 includes "gNB-DU Cell Resource Configuration", to implement a specific configuration of a DU resource. "DUF Slot Configuration Item" in "gNB-DU Cell Resource Configuration" is used to configure transmission directions of the DU, including uplink, downlink, and flexible. A configuration related to "HSNA Slot Configuration list" in "gNB-DU Cell Resource Configuration" is used to configure attributes (H, S, and NA) of the DU resource.

Further, the upper-level node may determine availability of a soft resource on the IAB-DU by sending downlink control information that carries indication information. The downlink control information may be DCI 2_5. When a downlink symbol, an uplink symbol, or a flexible symbol is configured to be hard, the DU may separately perform sending or receiving on the symbol. When a downlink symbol, an uplink symbol, or a flexible symbol is configured to be soft, when receiving, from the upper-level node, an indication indicating that a resource is an indication of availability, the DU may perform sending or receiving on the corresponding symbol.

The protocol supports the following configuration information related to a dynamic indication.

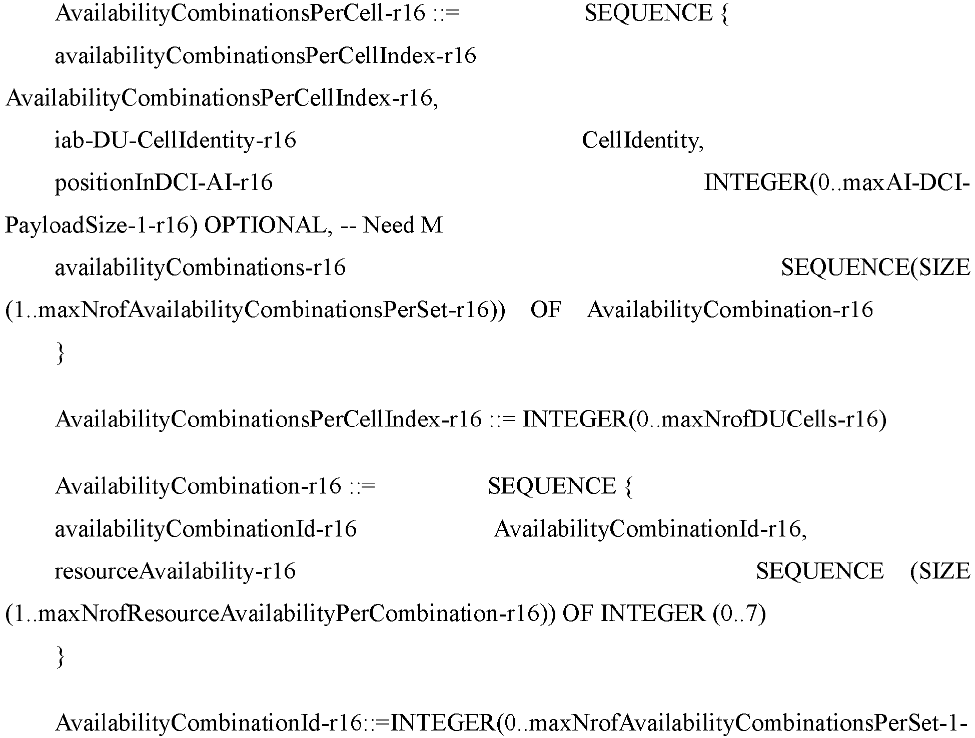

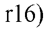

DCI 2_5 indicates availabilityCombinationsPerCellIndex, iab-DU-CellIdentity indicates a target cell ID, and positionInDCI-AI-r16 indicates a position of the indication information in DCI 2_5. AvailabilityCombinations includes resource availability indications of one or more slots, and the availability indication of each slot is indicated by using 3-bit information. A meaning of the 3-bit information may be predefined in the protocol.

To be specific, the upper-level IAB node indicates an ID in the DCI, and the lower-level IAB node can obtain AvailabilityCombinations corresponding to the ID by using preconfigured information. AvailabilityCombinations includes a sequence including a plurality of values (that is, values in the foregoing table). The sequence corresponds to resource availability of a plurality of slots.

The IAB DU resource configuration supported by the current protocol Rel-17 further supports a frequency domain resource configuration. In this solution, an original entire cell bandwidth is first divided into a plurality of parts in frequency domain, and bandwidth sizes of the plurality of frequency domain resources may be different. To be specific, in the IAB DU resource configuration supported by Rel-17, a frequency domain resource of a cell may be divided into a plurality of resource block groups (for example, to a resource block group 1 and a resource block group 2), that is, the frequency domain resource of the cell is refined into a granularity of a resource block set RB set. Then, time domain H/S/NA is configured at each smaller frequency domain granularity. The protocol allows frequency division resource configuration to be performed on some slots, and existing resource configuration in Rel-16 still exists.

In a Rel-17 resource configuration solution, an indication indicating whether a DU frequency domain S resource is available is also correspondingly introduced. Specific configuration information related to the dynamic indication is as follows.

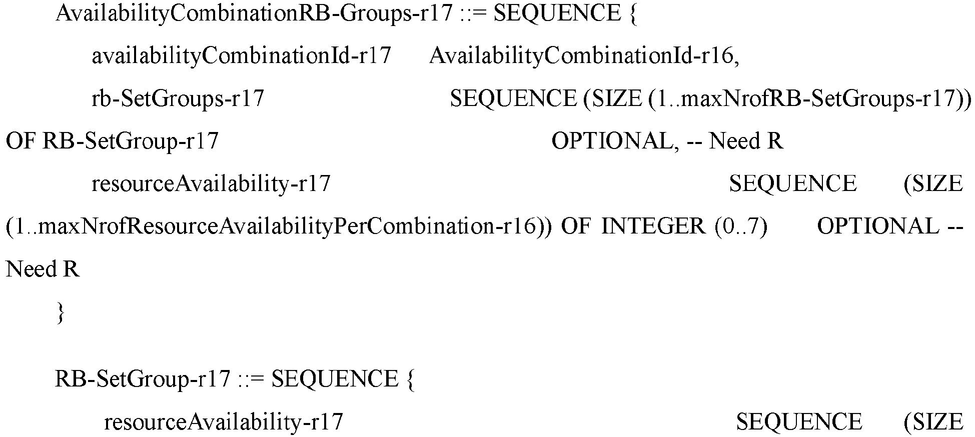

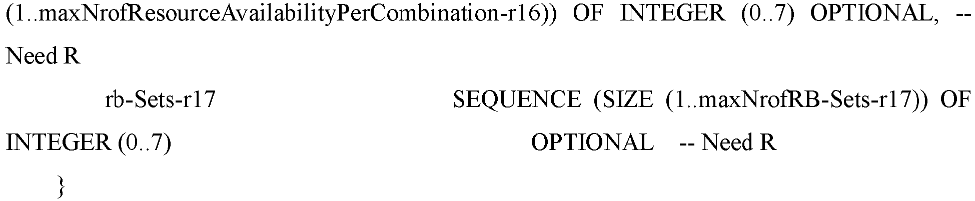

In comparison with configuration information related to a dynamic indication in Rel-16, Rel-17 supports separately indicating availabilityCombinations for a plurality of RB-SetGroups.

In conclusion, in an IAB network, the resource configuration of the IAB node may include at least one of a time domain resource availability configuration and a frequency domain resource availability configuration. In addition, the IAB node may receive at least one of a slot resource availability indication and a frequency domain resource availability indication. In this case, how to flexibly indicate resource availability of the IAB node is a problem that needs to be resolved.

The following describes in detail a communication method provided in embodiments of this application with reference to the accompanying drawings. The communication method provided in this application may be applied to the network architecture shown in FIG. 1. This is not limited.

For ease of understanding embodiments of this application, the following descriptions are provided.
(1) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "first" and "second" are merely for ease of description, and are used to distinguish objects, but are not intended to limit the scope of embodiments of this application, and are not used to describe an order or a sequence of features. It should be understood that objects described in such a way are interchangeable in an appropriate circumstance, so that a solution other than embodiments of this application can be described.
(3) A time unit mentioned in embodiments of this application may be a slot (slot), a symbol, a subframe, a frame, a mini-subframe, or a mini-slot. The time domain resource mentioned in embodiments of this application may be a time unit, and the frequency domain resource may be a resource block set (RB set), a resource block set group (RB set group, RBG), a bandwidth part BWP, or the like. This is not specifically limited in this application.
(4) A manner of carrying the indication information, the configuration information, and the like in embodiments of this application may be but is not limited to one or a combination of at least two of radio resource control signaling, media access control MAC layer signaling, and physical layer PHY signaling. The radio resource control signaling includes radio resource control RRC signaling; the MAC layer signaling includes a MAC control element (control element, CE); and the physical layer signaling includes downlink control information (downlink control information, DCI) and the like.
(5) In embodiments of this application, after whether the S resource is available is further indicated, the S resource may be determined as "available" or "not available", or may be determined as "available", an "indication of availability", or "no indication of availability (no indication of availability)". An indication indicating whether the S resource is available may be configured for one or more of three TDD transmission direction configurations: uplink, downlink, and flexible. For example, signaling is used to indicate that an S uplink resource is an indication of availability, and that an S downlink resource and an S flexible resource are no indication of availability. It should be noted that "no indication of availability" is different from not available, that is, the IAB node (which may be specifically the DU of the IAB node) is not limited to being not available on the resource.

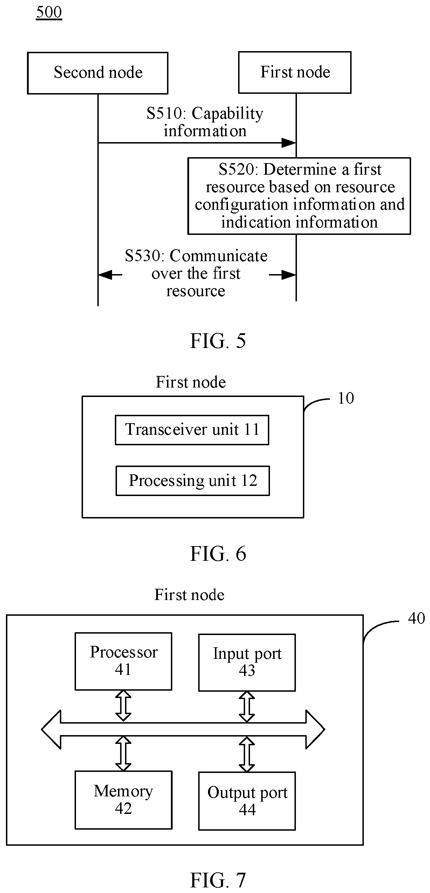

FIG. 5 is a diagram of a communication method 500 according to an embodiment of this application. The method 500 may include the following steps.

S510: A second node sends indication information to a first node.

Correspondingly, the first node receives the indication information from the second node.

The first node is configured with resource configuration information, and the resource configuration information may include at least one of first configuration information and second configuration information. The first configuration information is used to configure distribution of at least one type of resource in time domain. The second configuration information is used to configure distribution of the at least one type of resource in frequency domain.

In other words, the first configuration information is used to configure a resource type of a time domain resource of the first node, and the second configuration information is used to configure a resource type of a frequency domain resource of the first node.

The at least one type of resource includes at least one of the following resources: an available resource, a not available resource, and a resource (denoted as a first resource for ease of description) whose availability is indicated by an upper-level node of the first node. That is, resource types of the resource include the foregoing three types.

Specifically, the first configuration information may be used to configure a resource type of each time unit in a first set. The second configuration information is used to configure a resource type of at least one frequency domain resource group, the at least one frequency domain resource group corresponds to a second time unit in time domain, and the second time unit includes some or all time units in the first set. The resource type includes a definitely available resource, a not available resource, and a second resource.

The time unit corresponding to the frequency domain resource group in time domain may be understood as that at least one frequency domain resource group is obtained through division in frequency domain of the time unit, and the at least one frequency domain resource group corresponds to the time unit.

First indication information may indicate resource availability of a first time unit in the first set, and the first time unit is a time unit in which the second resource is configured. The second indication information indicates resource availability of a first frequency domain resource group, and the first frequency domain resource group is a frequency domain resource group configured with the second resource in the at least one frequency domain resource group.

The second node is an upper-level integrated access and backhaul IAB node of the first node, and a third node is a lower-level IAB node of the first node or a terminal device served by the first node.

S520: The first node determines the first resource based on the resource configuration information and the indication information.

The first resource may be a resource used by the first node to communicate with the second node and/or the third node.

Based on different configuration information configured for the first node and different indication information received by the first node, that the first node determines the first resource based on the configuration information may include a plurality of cases.

Case 1: The first node is configured with the first configuration information and the second configuration information.

In this case, based on different indication information received by the first node, that the first node determines the first resource may include the following several examples.

Example #1: The indication information includes the first indication information.

That the indication information includes the first indication information may be understood as that the second node sends the first indication information to the first node, but does not send the second indication information.

If a resource type of a time unit #1 configured by using the first configuration information is an H resource or a NA resource, and the corresponding second configuration information is configured in the time unit #1, the first node determines that the first resource includes an available resource configured by using the second configuration information. The available resource configured by using the second configuration information includes an H resource configured by using the second configuration information.

In other words, the first node has the first configuration information and the second configuration information, and receives the first indication information. The first node communicates with the second node and/or the third node in the time unit #1 by using the available resource configured by using the second configuration information.

That the corresponding second configuration information is configured in the time unit #1 may be understood as that at least one frequency domain resource group is obtained through division on a frequency domain resource in the time unit #1. The time unit in the first set includes the time unit #1.

Example #2: The indication information includes the first indication information, and the first indication information indicates no indication of availability.

That the first indication information indicates no indication of availability may be understood as that the first indication information indicates resource availability of the second resource in the first set, and the first indication information indicates that the second resource is no indication of availability.

In this example, the first node determines that the first resource includes an available resource configured by using the second configuration information. A time unit #2 is used as an example. The first configuration information and the second configuration information are configured in the time unit #2, and the first indication information indicates that the time unit #2 is no indication of availability. In this case, the first node determines to communicate with the second node and/or the third node in the time unit #2 by using the available resource configured by using the second configuration information.

Example #3: The first node receives no first indication information.

That the first node receives no first indication information may be understood as that the second node sends the first indication information to the first node, but the first node has not received the first indication information.

In this example, the first node may communicate with the second node and/or the third node by using a frequency domain resource #1 corresponding to a time unit in which the second configuration information is configured. The frequency domain resource #1 includes a frequency domain resource group configured with an available resource in the at least one frequency domain resource group configured by using the second configuration information.

Example #4: The indication information includes the first indication information, and the first indication information indicates that some symbols in the first time unit are indications of availability, and that another symbol is no indication of availability.

For the symbol indicated by the first indication information as no indication of availability, the first node may determine, based on the second configuration information, resource availability of a frequency domain resource group corresponding to the symbol that is no indication of availability. For example, the frequency domain resource group corresponding to the symbol that is no indication of availability includes a frequency domain resource group configured to be H. In this case, the first node determines that the symbol that is no indication of availability is available.

In this example, the first node may communicate with the second node and/or the third node by using a symbol that is in the symbol indicated by the first indication information as an indication of availability and the symbol indicated by the first indication information as no indication of availability and that corresponds to a frequency domain resource group configured to be available.

Example # 5: The indication information includes the first indication information and the second indication information.

In a possible implementation, the first node determines the resource availability of the first frequency domain resource group based on the second indication information. The first resource includes a frequency domain resource group configured to be available by using the second configuration information, and a frequency domain resource group that is an indication of availability in the first frequency domain resource group.

Alternatively, if the first indication information indicates that the first time unit in the first set is an indication of availability, the first resource includes a time unit configured to be available by using the first configuration information and a time unit indicated by the first indication information as an indication of availability.

Alternatively, if the first indication information indicates that the first time unit is no indication of availability, the first resource includes a resource configured to be available by using the second configuration information.

Alternatively, for a symbol indicated by the first indication information as no indication of availability, the first node may determine, based on the second configuration information, resource availability of a frequency domain resource group corresponding to the symbol that is no indication of availability. For example, a frequency domain resource corresponding to the symbol that is no indication of availability includes a frequency domain resource group configured to be H. In this case, the first node determines that the symbol that is no indication of availability is available.

In this example, the first node may communicate with the second node and/or the third node by using a symbol that is in a symbol indicated by the first indication information as an indication of availability and the symbol indicated by the first indication information as no indication of availability and that corresponds to a frequency domain resource group configured to be available.

Case 2: The first node is configured with the first configuration information.

Case 2 may be understood as that the first node is configured with the first configuration information, and the first node is not configured with the second configuration information. In other words, the first node is configured with only the resource type of the time domain resource, and no resource type is configured on a frequency domain resource corresponding to the time domain resource.

Example #1: The indication information includes the second indication information.

This example may be understood as that the first node is configured with only the resource type of each time unit in the first set, and the first node receives the second indication information from the second node. The second indication information indicates resource availability of at least one frequency domain resource group (for example, the first frequency domain resource group).

In this example, the first node determines the resource availability of the first time unit based on resource availability of one or more frequency domain resource groups in the first frequency domain resource group.

In a possible implementation, the first node determines the resource availability of the first time unit based on resource availability of a 1^{st} frequency domain resource group in the first frequency domain resource group. Specifically, if the first node determines that the 1^{st} frequency domain resource group in the first frequency domain resource group is an indication of availability, the first time unit is an indication of availability.

In another possible implementation, the first node determines the resource availability of the first time unit based on resource availability of each frequency domain resource group in the first frequency domain resource group. That the first node determines the resource availability of the first time unit based on the resource availability of each frequency domain resource group in the first frequency domain resource group may be understood as that the first node determines the resource availability of the first time unit based on resource availability of all frequency domain resource groups in the first frequency domain resource group.

Specifically, if the first node determines that each frequency domain resource group in the first frequency domain resource group is an indication of availability, the first time unit is an indication of availability. Alternatively, if the first node determines that any frequency domain resource group in the first frequency domain resource group is an indication of availability, the first time unit is an indication of availability.

Further, the resource availability of each frequency domain resource group in the first frequency domain resource group corresponds to resource availability of at least one type of symbol. That the first node determines resource availability of a first slot based on the resource availability of each frequency domain resource group in the first frequency domain resource group includes: If a first symbol corresponding to each frequency domain resource group in the first frequency domain resource group is an indication of availability, the first node determines that the first symbol in the first slot is available; or if a first symbol corresponding to any frequency domain resource group in the first frequency domain resource group is an indication of availability, the first node determines that the first symbol in the first slot is available.

It should be noted that, because one time unit includes a plurality of symbols, and each symbol may be used for an uplink or a downlink, the second node indicates the resource availability of the first time unit at a granularity of a time unit. The second node may define one or more of eight availability states shown in Table 1 for one time unit of the first node. In each case, three bits may indicate that symbols in all or some transmission directions in one time unit are indications of availability or are no indication of availability (no indication of availability).

It should be noted that, no indication of availability is different from not available. Herein, the resource is not limited to being not available to the first node. A protocol requirement is that transmission or non-transmission of the first node (for example, a DU of the first node) on the resource does not affect use of the resource by a co-site MT.

**Table 1**

| Value of a resource availability element | Type indication of availability of an S symbol |
|---|---|
| 0 | An uplink resource, a downlink resource, and a flexible resource are no indication of availability |
| 1 | A downlink resource is an indication of availability; and an uplink resource and a flexible resource are no indication of availability |
| 2 | An uplink resource is an indication of availability; and downlink and flexible S symbols are no indication of availability |
| 3 | An uplink resource and a downlink resource are indications of availability; and |
| | a flexible S symbol is no indication of availability |
| 4 | A flexible resource is an indication of availability; and an uplink resource and a downlink resource are no indication of availability |
| 5 | A downlink resource and a flexible resource are indications of availability; and |
| | an uplink resource is no indication of availability |
| 6 | An uplink resource and a flexible resource are indications of availability; and |
| | a downlink resource is no indication of availability |
| 7 | An uplink resource, a downlink resource, and a flexible resource are indications of availability |

S530: The first node communicates with the second node and/or the third node over the first resource.

The foregoing describes in detail resource configuration method side embodiments provided in embodiments of this application with reference to FIG. 5. The following describes in detail apparatus side embodiments of this application with reference to FIG. 6 and FIG. 7. It should be understood that descriptions of the method embodiments correspond to descriptions of the apparatus embodiments. Therefore, for a part that is not described in detail, refer to the foregoing method embodiments.

According to the foregoing method, FIG. 6 is a diagram of a communication apparatus 10 applicable to an embodiment of this application. As shown in FIG. 6, the communication apparatus 10 includes a transceiver unit 11 and a processing unit 12.

It should be understood that the communication apparatus 10 may correspond to the first node in the method 500 according to an embodiment of this application, and the communication apparatus 10 may include a module (or a unit) configured to perform the method performed by the first node. In addition, modules (or units) in the communication apparatus 10 and the foregoing other operations and/or functions are used to implement corresponding procedures of the method 500.

It should be understood that a structure of the apparatus 10 shown in FIG. 6 is merely a possible form, and should not constitute any limitation on this embodiment of this application. This application does not exclude a possibility that there may be a network device in another form in the future.

It should be understood that the communication apparatus according to this embodiment of this application may correspond to the first node in the foregoing method embodiments, and the foregoing and other management operations and/or functions of the modules (or units) in the communication apparatus 10 are separately used to implement corresponding steps of the foregoing methods. Therefore, beneficial effects in the foregoing method embodiments can also be achieved.

It should be further understood that the processing module (or unit) in this embodiment of this application may be implemented by a processor, and the transceiver module (or unit) may be implemented by a transceiver.

According to the foregoing method, FIG. 7 is a diagram of a communication apparatus (which may also be referred to as a relay device or a terminal device) 40 according to an embodiment of this application. As shown in FIG. 7, the apparatus 40 may be a first node, may be a component that can be used in a first node, may be a terminal device (for example, UE), or may be a chip or a circuit, for example, a chip or a circuit that may be disposed in a relay device or a terminal device.

The apparatus 40 may include a processor 41 (that is, an example of a processing unit) and a memory 42. The memory 42 is configured to store instructions, and the processor 41 is configured to execute the instructions stored in the memory 42, to enable the apparatus 40 to implement the steps performed by the first node (for example, the first IAB node) in the foregoing method (for example, the method 500).

Optionally, the apparatus 40 may further include an input port 43 (that is, an example of a communication unit) and an output port 44 (that is, another example of a communication unit). It should be understood that the processor 41, the memory 42, the input port 43, and the output port 44 may communicate with each other by using an internal connection path, to transfer a control signal and/or a data signal.

The memory 42 is configured to store a computer program. The processor 41 may be configured to invoke and run the computer program from the memory 42, to control the input port 43 to receive a signal, control the output port 44 to send a signal, and complete the steps of the network device in the foregoing method.

The memory 42 may be integrated into the processor 41, or may be disposed separately from the processor 41.

Optionally, if the apparatus 40 is a relay device or a terminal device, the input port 43 is a receiver, and the output port 44 is a transmitter. The receiver and the transmitter may be a same physical entity or different physical entities. When the receiver and the transmitter are a same physical entity, the receiver and the transmitter may be collectively referred to as a transceiver.

Optionally, if the apparatus 40 is a chip or a circuit, the input port 43 is an input interface, and the output port 44 is an output interface.

In an implementation, it may be considered that functions of the input port 43 and the output port 44 are implemented by using a transceiver circuit or a dedicated transceiver chip. It may be considered that the processor 41 is implemented by using a dedicated processing chip, a processing circuit, a processor, or a general-purpose chip.

In another implementation, it may be considered that the first node (for example, the first IAB node) provided in embodiments of this application is implemented by using a general-purpose computer. To be specific, program code for implementing functions of the processor 41, the input port 43, and the output port 44 is stored in the memory 42, and a general-purpose processor implements the functions of the processor 41, the input port 43, and the output port 44 by executing the code in the memory 42.

In this embodiment of this application, the input port 43 is configured to receive first information, where the first information includes indication information of a first pattern, the first pattern is one of a plurality of patterns, and each of the plurality of patterns indicates distribution of at least one type of resource in frequency domain. The at least one type of resource includes at least one of the following resources: a first resource, a second resource, and a third resource. The first resource is a definitely available resource, the second resource is a not available resource, and whether the third resource is available is determined based on first indication information. The first indication information is sent by a first network device, and resource distribution indicated by any two patterns is different.

The processor 41 is configured to: determine, based on the first pattern, a resource for communicating with a second network device and/or the terminal device.

Optionally, the processor 41 is further configured to: determine, on a first time domain resource based on the first pattern, a resource for communicating with the second network device and/or the terminal device.

Optionally, the input port 43 is further configured to receive second information, where the second information indicates the first time domain resource.

Optionally, the apparatus 40 is configured in or is a relay device, the first node (for example, the first IAB node), or a terminal device (for example, UE).

Functions and actions of the modules or units in the apparatus 40 listed above are merely examples for description. The modules or units in the apparatus 40 may be configured to perform actions or processing processes performed by the first node (for example, the first IAB node) in the method 500. Herein, to avoid repetition, detailed descriptions are omitted.

For concepts, explanations, detailed descriptions, and other steps of the apparatus 40 that are related to the technical solutions provided in embodiments of this application, refer to the descriptions of the content in the foregoing methods or other embodiments. Details are not described herein again.

In a possible implementation, with development of a system-on-chip (System-on-chip, SoC) technology, all or some functions of the apparatus 40 are implemented by using the SoC technology, for example, implemented by a terminal device function chip. The terminal device function chip integrates components such as a processor, a memory, and a communication interface. A program of a function related to the terminal device is stored in the memory, and the processor executes the program to implement a function related to the user equipment. Optionally, the terminal device function chip can also read a memory outside the chip to implement the function related to the user equipment.

It should be understood that a structure of the apparatus 40 shown in FIG. 7 is merely a possible form, and should not constitute any limitation on this embodiment of this application. This application does not exclude a possibility that there may be a user equipment structure in another form in the future.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any other combination. When the software is used for implementation, all or some of the foregoing embodiments may be implemented in a form of a computer program product. The computer program product includes one or more computer instructions or computer programs. When the computer instructions or the computer programs are loaded or executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

It should be further understood that "first", "second", and the like mentioned in this specification are merely used for differentiation to describe the technical solutions of this application more clearly, and should not constitute any limitation on this application.

Terms such as "component", "module", and "system" used in this specification are used to indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As shown in figures, both a computing device and an application that runs on the computing device may be components. One or more components may reside within a process and/or an execution thread, and the components may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network like an internet interacting with another system by using the signal).

A person of ordinary skill in the art may be aware that, units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for specific working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first node, second indication information from a second node, wherein the first node is configured with first configuration information, the first configuration information is used to configure a resource type of each slot in a first set, the first set comprises a first slot, the first slot is a slot in which a first resource is configured, and the second indication information indicates resource availability of at least one frequency domain resource group;
determining, by the first node, resource availability of the first slot based on resource availability of one or more frequency domain resource groups in the first frequency domain resource group; and
communicating, by the first node, with a third node in a slot that is in the first slot and that is an indication of availability, wherein
the second node is an upper-level integrated access and backhaul IAB node of the first node, the third node is a lower-level IAB node of the first node or a terminal device served by the first node, the resource type comprises an available resource, a not available resource, and the first resource, and whether the first resource is available is indicated by the second node.

2. The method according to claim 1, wherein the determining, by the first node, resource availability of the first slot based on resource availability of one or more frequency domain resource groups in the first frequency domain resource group comprises:
determining, by the first node, the resource availability of the first slot based on resource availability of a 1^{st} frequency domain resource group in the first frequency domain resource group; or
determining, by the first node, the resource availability of the first slot based on resource availability of each frequency domain resource group in the first frequency domain resource group.

3. The method according to claim 2, wherein the determining, by the first node, the resource availability of the first slot based on resource availability of a 1^{st} frequency domain resource group in the first frequency domain resource group comprises:
if each frequency domain resource group in the first frequency domain resource group is an indication of availability, determining that the first slot is available.

4. The method according to claim 2, wherein the determining, by the first node, the resource availability of the first slot based on resource availability of each frequency domain resource group in the first frequency domain resource group comprises:
if each frequency domain resource group in the first frequency domain resource group is an indication of availability, determining that the first slot is available; or
if any frequency domain resource group in the first frequency domain resource group is an indication of availability, determining that the first slot is available.

5. The method according to claim 2, wherein the resource availability of each frequency domain resource group in the first frequency domain resource group corresponds to resource availability of at least one type of symbol, and the determining, by the first node, the resource availability of the first slot based on resource availability of each frequency domain resource group in the first frequency domain resource group comprises:
if each frequency domain resource group in at least one frequency domain resource group corresponding to a first symbol in the first slot is an indication of availability, determining that the first symbol is available; or
if any frequency domain resource group in at least one frequency domain resource group corresponding to a first symbol in the first slot is an indication of availability, determining that the first symbol is available, wherein
the at least one type of symbol comprises the first symbol, and the first symbol is an uplink symbol, a downlink symbol, or a flexible symbol.

6. A communication method, comprising:
receiving, by a first node, first indication information from a second node, wherein the first indication information indicates resource availability of a first slot in a first set, the first set comprises at least one slot, the first slot is a slot in which a first resource is configured, the first node is configured with first configuration information and second configuration information, the first configuration information is used to configure a resource type of each slot in the first set, and the second configuration information is used to configure a resource type of at least one frequency domain resource group corresponding to each slot in the first set;
determining, by the first node, a second resource based on the first indication information; and
communicating, by the first node, with a third node over the second resource, wherein the second node is an upper-level integrated access and backhaul IAB node of the first node, the third node is a lower-level IAB node of the first node or a terminal device served by the first node, the resource type comprises an available resource, a not available resource, and the first resource, and whether the first resource is available is indicated by the second node.

7. The method according to claim 6, wherein the determining, by the first node, a second resource based on the first indication information comprises:
if the first indication information indicates that the first slot is no indication of availability, determining, by the first node, that the second resource comprises an available resource in at least one frequency domain resource group corresponding to the first slot.

8. The method according to claim 6 or 7, wherein the method further comprises:
if the first set comprises a second slot configured to be an available resource, determining, by the first node, that the second resource comprises the second slot; and/or
if the first set comprises a third slot configured to be not available, determining, by the first node, that the second resource comprises the third slot.

9. The method according to claim 6, wherein the determining, by the first node, a second resource based on the first indication information comprises:
if a first symbol in the first slot is an indication of availability and a second symbol in the first slot is no indication of availability, determining, by the first node, that the second resource comprises an available resource in at least one frequency domain resource group corresponding to the first slot, wherein
the first symbol and the second symbol each are any one of an uplink symbol, a downlink symbol, or a flexible symbol, and the first symbol and the second symbol are of different symbol types.

10. A communication method, comprising:
receiving, by a first node, first indication information and second indication information from a second node, wherein the first indication information indicates resource availability of a first slot in a first set, the first set comprises at least one slot, the first slot is a slot in which a first resource is configured, the second indication information indicates resource availability of a first frequency domain resource group, the first frequency domain resource group is a frequency domain resource group configured with the first resource, the first node is configured with first configuration information and second configuration information, the first configuration information is used to configure a resource type of each slot in the first set, and the second configuration information is used to configure a resource type of at least one frequency domain resource group corresponding to each slot in the first set;
determining, by the first node, a second resource based on at least one of the first indication information and the second indication information; and
communicating, by the first node, with a third node over the first resource, wherein the second node is an upper-level integrated access and backhaul IAB node of the first node, the third node is a lower-level IAB node of the first node or a terminal device served by the first node, the resource type comprises an available resource, a not available resource, and the first resource, and whether the first resource is available is indicated by the second node.

11. The method according to claim 10, wherein the determining, by the first node, a second resource based on at least one of the first indication information and the second indication information comprises:
determining, by the first node, the second resource based on the second indication information, wherein the second resource comprises an available resource in the at least one frequency domain resource group corresponding to each slot in the first set.

12. The method according to claim 10 or 11, wherein the determining, by the first node, a second resource based on at least one of the first indication information and the second indication information comprises:
determining, by the first node, the second resource based on the first indication information, wherein the first indication information indicates that the first slot is an indication of availability, and the second resource comprises the first slot; or
determining, by the first node, the second resource based on the first indication information and the second indication information.

13. The method according to claim 12, wherein the determining, by the first node, the second resource based on the first indication information and the second indication information comprises:
determining, by the first node based on the first indication information, that the first slot is no indication of availability; and
determining, by the first node, the second resource based on the second indication information, wherein the second resource comprises an available resource in at least one frequency domain resource group corresponding to the first slot.

14. The method according to claim 12, wherein the determining, by the first node, the second resource based on the first indication information and the second indication information comprises:
determining, by the first node based on the first indication information, that a first symbol in the first slot is available and that a second symbol in the first slot is no indication of availability; and
determining, by the first node, the second resource based on the second indication information, wherein the second resource comprises the first symbol and an available resource in at least one frequency domain resource group corresponding to the second symbol.

15. A communication apparatus, comprising a transceiver unit and a processing unit, wherein the transceiver unit is configured to receive second indication information from a second node, wherein the apparatus is configured with first configuration information, the first configuration information is used to configure a resource type of each slot in a first set, the first set comprises a first slot, the first slot is a slot in which a first resource is configured, and the second indication information indicates resource availability of at least one frequency domain resource group;
the processing unit is configured to determine resource availability of the first slot based on resource availability of one or more frequency domain resource groups in the first frequency domain resource group; and
the first node communicates with a third node in a slot that is in the first slot and that is an indication of availability, wherein
the second node is an upper-level integrated access and backhaul IAB node of the apparatus, the third node is a lower-level IAB node of the apparatus or a terminal device served by the apparatus, the resource type comprises an available resource, a not available resource, and the first resource, and whether the first resource is available is indicated by the second node.

16. The communication apparatus according to claim 15, wherein the processing unit is specifically configured to:
determine the resource availability of the first slot based on resource availability of a 1^{st} frequency domain resource group in the first frequency domain resource group; or
determine the resource availability of the first slot based on resource availability of each frequency domain resource group in the first frequency domain resource group.

17. The communication apparatus according to claim 16, wherein the processing unit is specifically configured to:
if each frequency domain resource group in the first frequency domain resource group is an indication of availability, determine that the first slot is available.

18. The communication apparatus according to claim 16, wherein the processing unit is specifically configured to:
if each frequency domain resource group in the first frequency domain resource group is an indication of availability, determine that the first slot is available; or
if any frequency domain resource group in the first frequency domain resource group is an indication of availability, determine that the first slot is available.

19. The communication apparatus according to claim 16, wherein the resource availability of each frequency domain resource group in the first frequency domain resource group corresponds to resource availability of at least one type of symbol, and the processing unit is specifically configured to:
if each frequency domain resource group in at least one frequency domain resource group corresponding to a first symbol in the first slot is an indication of availability, determine that the first symbol is available; or
if any frequency domain resource group in at least one frequency domain resource group corresponding to a first symbol in the first slot is an indication of availability, determine that the first symbol is available, wherein
the at least one type of symbol comprises the first symbol, and the first symbol is an uplink symbol, a downlink symbol, or a flexible symbol.

20. A communication apparatus, comprising a transceiver unit and a processing unit, wherein
the transceiver unit is configured to receive first indication information from a second node, wherein the first indication information indicates resource availability of a first slot in a first set, the first set comprises at least one slot, the first slot is a slot in which a first resource is configured, the apparatus is configured with first configuration information and second configuration information, the first configuration information is used to configure a resource type of each slot in the first set, and the second configuration information is used to configure a resource type of at least one frequency domain resource group corresponding to each slot in the first set;
the processing unit is configured to determine a second resource based on the first indication information; and
the transceiver unit is further configured to communicate with a third node over the second resource, wherein the second node is an upper-level integrated access and backhaul IAB node of the apparatus, the third node is a lower-level IAB node of the apparatus or a terminal device served by the apparatus, the resource type comprises an available resource, a not available resource, and the first resource, and whether the first resource is available is indicated by the second node.

21. The communication apparatus according to claim 20, wherein the processing unit is specifically configured to:
if the first indication information indicates that the first slot is no indication of availability, determine that the second resource comprises an available resource in at least one frequency domain resource group corresponding to the first slot.

22. The communication apparatus according to claim 20 or 21, wherein the processing unit is further configured to:
if the first set comprises a second slot configured to be an available resource, determine that the second resource comprises the second slot; and/or
if the first set comprises a third slot configured to be not available, determine that the second resource comprises the third slot.

23. The communication apparatus according to claim 20, wherein the processing unit is specifically configured to:
if a first symbol in the first slot is an indication of availability and a second symbol in the first slot is no indication of availability, determine that the second resource comprises an available resource in at least one frequency domain resource group corresponding to the first slot, wherein
the first symbol and the second symbol each are any one of an uplink symbol, a downlink symbol, or a flexible symbol, and the first symbol and the second symbol are of different symbol types.

24. A communication apparatus, comprising a transceiver unit and a processing unit, wherein
the transceiver unit is configured to receive first indication information and second indication information from a second node, wherein the first indication information indicates resource availability of a first slot in a first set, the first set comprises at least one slot, the first slot is a slot in which a first resource is configured, the second indication information indicates resource availability of a first frequency domain resource group, the first frequency domain resource group is a frequency domain resource group configured with the first resource, the first apparatus is configured with first configuration information and second configuration information, the first configuration information is used to configure a resource type of each slot in the first set, and the second configuration information is used to configure a resource type of at least one frequency domain resource group corresponding to each slot in the first set;
the processing unit is configured to determine a second resource based on at least one of the first indication information and the second indication information; and
the transceiver unit is further configured to communicate with a third node over the first resource, wherein the second node is an upper-level integrated access and backhaul IAB node of the apparatus, the third node is a lower-level IAB node of the first node or a terminal device served by the apparatus, the resource type comprises an available resource, a not available resource, and the first resource, and whether the first resource is available is indicated by the second node.

25. The communication apparatus according to claim 24, wherein the processing unit is specifically configured to:
determine the second resource based on the second indication information, wherein the second resource comprises an available resource in the at least one frequency domain resource group corresponding to each slot in the first set.

26. The communication apparatus according to claim 24 or 25, wherein the processing unit is specifically configured to:
determine the second resource based on the first indication information, wherein the first indication information indicates that the first slot is an indication of availability, and the second resource comprises the first slot; or
determine the second resource based on the first indication information and the second indication information.

27. The communication apparatus according to claim 26, wherein the processing unit is specifically configured to:
determine, based on the first indication information, that the first slot is no indication of availability; and
determine the second resource based on the second indication information, wherein the second resource comprises an available resource in at least one frequency domain resource group corresponding to the first slot.

28. The communication apparatus according to claim 26, wherein the processing unit is specifically configured to:
determine, based on the first indication information, that a first symbol in the first slot is available and that a second symbol in the first slot is no indication of availability; and
determine the second resource based on the second indication information, wherein the second resource comprises the first symbol and an available resource in at least one frequency domain resource group corresponding to the second symbol.

29. A communication apparatus, comprising a processor, wherein the processor is coupled to a memory; and the processor is configured to execute a computer program stored in the memory, to enable the apparatus to perform the method according to any one of claims 1 to 5, enable the apparatus to perform the method according to any one of claims 6 to 9, or enable the apparatus to perform the method according to any one of claims 10 to 14.

30. A communication system, comprising:
the apparatus according to any one of claims 15 to 19, the apparatus according to any one of claims 20 to 23, or the apparatus according to any one of claims 24 to 28.

31. A computer-readable storage medium, wherein
the computer-readable storage medium stores a computer program, and when the computer program is run, the computer is enabled to perform the method according to any one of claims 1 to 5, the apparatus is enabled to perform the method according to any one of claims 6 to 9, or the apparatus is enabled to perform the method according to any one of claims 10 to 14.
